# EUROPÄISCHE PATENTANMELDUNG

(11) **EP 4 480 797 A1**
(43) Veröffentlichungstag der Anmeldung: **25.12.2024**
(21) Anmeldenummer: 24182847.4
(22) Anmeldetag: 18.06.2024
(51) Int. Cl.: B62H 5/14, E05B 47/00, E05B 67/28, E05B 71/00

(54) **ELEKTRONISCHES RAHMENSCHLOSS**

(30) Priorität: 20.06.2023 DE 102023116143
(71) Anmelder: ABUS August Bremicker Söhne KG, 58300 Wetter-Volmarstein (DE)
(72) Erfinder:
(74) Vertreter: Manitz Finsterwald Patent- und Rechtsanwaltspartnerschaft mbB

(57) **Zusammenfassung**

Ein elektronisches Rahmenschloss weist eine Steuereinrichtung auf, die dazu ausgebildet ist, ausgehend von einer Offenstellung eines Rundbügels des Rahmenschlosses aufgrund eines Schließbefehls einen Elektromotor zum Drehen eines Nockens in eine Freigabestellung anzusteuern und dadurch einen in eine Verriegelungsstellung vorgespannten Riegel in eine Entriegelungsstellung zu bewegen; sodann den Elektromotor zum Drehen des Nockens in eine Vorspannstellung anzusteuern, in welcher der Riegel für eine Bewegung in Richtung der Entriegelungsstellung freigegeben ist; und bei einer Detektion einer Geschlossenstellung des Rundbügels den Elektromotor zum Drehen des Nockens in eine Sperrstellung anzusteuern, in welcher der Nocken den Riegel in der Verriegelungsstellung sichert.

## Beschreibung

Die Erfindung betrifft ein elektronisches Rahmenschloss für ein Fahrrad.

Derartige Rahmenschlösser können beispielsweise an einem Rahmen eines Fahrrads befestigt werden und einen Rundbügel aufweisen, welcher in einer Geschlossenstellung durch eines der Laufräder zwischen zwei Speichen hindurchgreifen kann, um das Fahrrad dadurch gegen ein unbefugtes Wegfahren zu sichern. In einer Offenstellung kann der Rundbügel hingegen aus einem Raum zurückgezogen sein, in welchem das Laufrad während einer Fahrt mit dem Fahrrad dreht, um das Fahrrad für eine solche Fahrt freizugeben. Beispielsweise kann ein Fahrrad, welches durch ein derartiges Rahmenschloss sicherbar ist, als ein Zweirad ausgebildet sein, wobei Rahmenschlösser jedoch auch zur Sicherung von dreirädrigen oder vierrädrigen Fahrrädern, beispielsweise Lastenrädern, genutzt werden können. Das Fahrrad kann muskelkraftbetrieben, motorbetrieben oder motorunterstützt sein, insbesondere durch einen Elektromotor (z.B. E-Bike oder Pedelec, Elektrodreirad, Elektrorollstuhl, Elektroquad oder dergleichen).

Beispielsweise ist ein derartiges Rahmenschloss aus DE 10 2005 041 268 A1 bekannt, wobei bei diesem Rahmenschloss ein in Richtung einer Verriegelungsstellung vorgespannter Riegel vorgesehen ist, mittels dessen der Rundbügel in der Geschlossenstellung und der Offenstellung gesichert werden kann. Zudem ist bei dem Rahmenschloss eine Blockierfeder vorgesehen, welche dazu ausgebildet ist, den Riegel in der Verriegelungsstellung gegen eine Bewegung entgegen der Vorspannung zu sichern, um das Schloss dadurch insbesondere vor unbefugten Öffnungsversuchen unter Anwendung der sogenannten Hammerschlag-Methode zu schützen. Bei dieser Methode wird versucht, einen vorgespannten Riegel durch einen Schlag kurzzeitig entgegen der Vorspannung zurückzudrängen und dieses Zeitfenster dazu zu nutzen, den Rundbügel aus der Geschlossenstellung heraus zu bewegen. Die Blockierfeder sichert den Riegel hingegen gegen ein solches Zurückdrängen aufgrund eines Schlages.

Um es dem berechtigten Nutzer jedoch zu ermöglichen, den Riegel in eine Entriegelungsstellung und den Rundbügel zwischen der Offenstellung und der Geschlossenstellung zu bewegen, ist bei dem bekannten Rahmenschloss eine durch einen Elektromotor drehbare Welle mit einem Entriegelungsnocken vorgesehen, wobei der Riegel bei einem Drehen der Welle durch den Entriegelungsnocken in die Entriegelungsstellung drängbar ist. Zudem ist an der Welle eine Freigabenase ausgebildet, welche mit einer Zwangsführungsfläche der Blockierfeder zusammenwirkt und die Blockierfeder während des Drehens der Welle derart zurückdrängt, dass die Blockierfeder den Riegel für die Bewegung in die Entriegelungsstellung freigibt.

Bei diesem Stand der Technik kann der Riegel somit zwar gegen ein unbefugtes Bewegen in die Entriegelungsstellung gesichert werden, jedoch ist dazu ein eigenes Bauteil in Form der Blockierfeder erforderlich und durch einen Verschleiß der Blockierfeder oder deren Zwangsführungsfläche kann die Zuverlässigkeit der Sicherung des Riegels und/oder die Bedienbarkeit des Rahmenschlosses mit zunehmender Nutzungsdauer beeinträchtigt sein. Darüber hinaus ergibt sich auch eine Schwierigkeit in der Handhabung des Rahmenschlosses, da ein Nutzer den Rundbügel beispielsweise nach einem Überführen in die Geschlossenstellung manuell solange halten muss, bis die Welle so weit gedreht ist, dass der Riegel für eine Bewegung in die Verriegelungsstellung freigegeben ist. Erreicht der Rundbügel die Geschlossenstellung vor der Freigabe des Riegels und wird der Rundbügel nicht durch einen Nutzer in der Geschlossenstellung gehalten, gelangt der in die Offenstellung vorgespannte Rundbügel hingegen wieder ungewollt in die Offenstellung.

Daher ist es eine Aufgabe der Erfindung, ein elektronisches Rahmenschloss zu schaffen, welches eine zuverlässigere Sicherung gegen unbefugte Öffnungsversuche und insbesondere die Hammerschlag-Methode sowie eine vereinfachte Handhabung ermöglicht.

Diese Aufgabe wird gelöst durch ein elektronisches Rahmenschloss mit den Merkmalen des Anspruchs 1.

Das elektronische Rahmenschloss umfasst einen zwischen einer Offenstellung und einer Geschlossenstellung drehbaren Rundbügel, einen Elektromotor, einen von dem Elektromotor zu einer exzentrischen Drehbewegung um eine Drehachse antreibbaren Nocken, einen senkrecht zu der Drehachse und radial zu dem Rundbügel zwischen einer Verriegelungsstellung und einer Entriegelungsstellung geradlinig beweglichen Riegel, welcher in Richtung einer Verriegelungsstellung vorgespannt ist, einen Bügeldetektor, welcher dazu ausgebildet ist, die Geschlossenstellung des Rundbügels zu detektieren, und eine Steuereinrichtung. Der sich in der Geschlossenstellung befindliche Rundbügel ist ferner durch den in der Verriegelungsstellung befindlichen Riegel gegen eine Bewegung in Richtung der Offenstellung sicherbar und durch Bewegen des Riegels in die Entriegelungsstellung für eine Bewegung in die Offenstellung freigebbar.

Zudem ist der Nocken durch den Elektromotor in eine Sperrstellung, eine Vorspannstellung und eine Freigabestellung drehbar und der Riegel weist eine Steueröffnung auf, in welche der Nocken eingreift. Der Riegel ist daher durch Drehen des Nockens gemäß der Drehbewegung des Nockens und einer Kontur der Steueröffnung antreibbar.

### Dabei ist der Riegel:

- durch Drehen des Nockens in die Sperrstellung von dem Nocken gegen eine Bewegung aus der Verriegelungsstellung in Richtung der Entriegelungsstellung sicherbar,
- durch Drehen des Nockens in die Vorspannstellung für eine Bewegung entgegen der Vorspannung in Richtung der Entriegelungsstellung freigebbar, und
- durch Drehen des Nockens in die Freigabestellung von dem Nocken entgegen der Vorspannung in die Entriegelungsstellung bewegbar.

Zudem ist die Steuereinrichtung dazu ausgebildet, den Elektromotor zum Drehen des Nockens wahlweise in die Sperrstellung, die Vorspannstellung und die Freigabestellung anzusteuern, wobei die Steuereinrichtung ferner dazu ausgebildet ist, den Elektromotor in Ansprechen auf eine Detektion der Geschlossenstellung des Rundbügels durch den Bügeldetektor zum Drehen des Nockens in die Sperrstellung anzusteuern.

Indem der Nocken dazu ausgebildet ist, in die Steueröffnung des Riegels einzugreifen und den Riegel in der Sperrstellung gegen eine Bewegung aus der Verriegelungsstellung in Richtung der Entriegelungsstellung zu sichern, kann somit unmittelbar der Nocken, welcher auch zum Bewegen des Riegels aus der Verriegelungsstellung in die Entriegelungsstellung vorgesehen ist, zum Sichern des Riegels in der Verriegelungsstellung dienen. Daher ist es nicht erforderlich, zum Sichern des Riegels auf ein gesondertes Bauteil zurückzugreifen, sondern der ohnehin zum Bewegen des Riegels in die Entriegelungsstellung benötigte Nocken kann auch zum Sichern des Riegels genutzt werden. Zudem kann der Nocken als gewissermaßen zentrales mechanisches Bauteil zum Bewegen des Riegels und damit zum Steuern der Verriegelung häufig stabil ausgebildet sein, so dass diese Stabilität auch zum Sichern des Riegels in der Verriegelungsstellung genutzt werden kann. Dies ermöglicht eine gegenüber dem Stand der Technik einfachere und zuverlässigere Sicherung des Rahmenschlosses gegen die unbefugte Öffnungsversuche unter Einsatz der Hammerschlag-Methode.

In der Vorspannstellung des Nockens ist der Riegel für eine Bewegung entgegen der Vorspannung in Richtung der Entriegelungsstellung freigegeben und kann insbesondere zwischen der Verriegelungsstellung und der Entriegelungsstellung bewegbar sein. Das Drehen des Nockens in die Vorspannstellung ermöglicht es, den Riegel bereits für einen Eingriff zum Blockieren des Rundbügels in der Geschlossenstellung vorzubereiten, dabei jedoch eine Verdrängung in Richtung der Entriegelungsstellung zuzulassen. Daher kann der Riegel bei in die Vorspannstellung gedrehtem Nocken beispielsweise während eines Bewegens des Rundbügels von der Offenstellung in die Geschlossenstellung an dem Rundbügel entlang gleiten, um jedoch bei einem Erreichen der Geschlossenstellung aufgrund der Vorspannung unmittelbar in die Verriegelungsstellung gelangen und den Rundbügel gegen eine Bewegung in Richtung der Offenstellung sichern zu können. Hierdurch kann der Rundbügel insbesondere bereits gegen eine Bewegung zurück in die Offenstellung gesichert sein, so dass ein Nutzer beispielsweise auch bei Ausführungsformen, bei welchen der Rundbügel in die Offenstellung vorgespannt ist, den Rundbügel lediglich in die Geschlossenstellung drehen, dort jedoch nicht manuell halten muss, bis der Nocken in die Sperrstellung gedreht wurde.

Zudem ermöglicht es das Drehen des Nockens in die Freigabestellung durch eine entsprechende Ansteuerung des Elektromotors, den Riegel in die Entriegelungsstellung zu bewegen und beispielsweise außer Eingriff zu einer Geschlossenstellung-Eingriffsvertiefung zu bringen, um den Rundbügel für eine Bewegung in die Offenstellung freigeben zu können. Insofern kann eine vollständig elektronische Ansteuerung des Riegels erreicht werden.

Die Ausbildung der Steuereinrichtung dazu, den Elektromotor gezielt zum Drehen des Nockens in die Sperrstellung, die Vorspannstellung und die Freigabestellung ansteuern zu können, kann ferner eine situationsabhängige Positionierung des Riegels ermöglichen, um eine verbesserte Handhabung des Schlosses und insbesondere ein automatisches Blockieren des Rundbügels in der Geschlossenstellung erreichen zu können. Beispielsweise kann der Nocken dazu während eines Bewegens des Rundbügels aus der Offenstellung heraus in Richtung der Geschlossenstellung durch entsprechende Ansteuerung des Elektromotors bereits in die Vorspannstellung gedreht werden, um ein automatisches Verriegeln des Rundbügels bei einem Erreichen der Geschlossenstellung vorzubereiten.

Ferner kann durch die Ausbildung des Rahmenschlosses mit einem Bügeldetektor zum Detektieren der Geschlossenstellung erreicht werden, dass die Steuereinrichtung in Ansprechen auf ein entsprechendes Signal des Bügeldetektors den Elektromotor bei einem Erreichen der Geschlossenstellung zum Drehen des Nockens in die Sperrstellung ansteuern kann, um den Riegel durch den Nocken automatisch gegen eine Bewegung aus der Verriegelungsstellung heraus zu sichern. Gewissermaßen kann somit durch einen automatischen Eingriff des Riegels bei einem Erreichen der Geschlossenstellung durch vorhergehendes Drehen des Nockens in die Vorspannstellung eine vorläufige Sicherung des Rundbügels gegen eine Bewegung zurück in die Offenstellung erreicht werden, woraufhin durch das automatische Drehen des Nockens in die Sperrstellung aufgrund des Signals des Bügeldetektors eine Fixierung des Riegels in der Verriegelungsstellung und damit eine zuverlässige Verriegelung des Rundbügels gegenüber etwaigen Aufbruchsversuchen erfolgen kann.

Um den Riegel wahlweise in die Entriegelungsstellung antreiben und in der Verriegelungsstellung blockieren zu können, kann der Nocken insbesondere dazu ausgebildet sein, den Riegel direkt mechanisch zu kontaktieren. Insofern kann insbesondere vorgesehen sein, dass zwischen dem Nocken und dem Riegel keine weiteren Antriebsübertragungselemente angeordnet sind, sondern der Riegel durch einen unmittelbaren Eingriff des Nockens in der Verriegelungsstellung sicherbar und in die Entriegelungsstellung bewegbar ist.

Indem der Riegel zwischen der Verriegelungsstellung und der Entriegelungsstellung senkrecht zu der Drehachse des Nockens und radial zu dem Rundbügel geradlinig beweglich ist, kann der Riegel insbesondere entlang einer Bewegungsrichtung bewegbar sein, welche senkrecht zu der Drehachse des Nockens und radial zu dem Rundbügel ausgerichtet ist.

Weitere Ausführungsformen sind den abhängigen Ansprüchen, der Beschreibung und den Zeichnungen zu entnehmen.

Bei einigen Ausführungsformen kann der Rundbügel eine Geschlossenstellung-Eingriffsvertiefung aufweisen und der Riegel kann dazu ausgebildet sein, bei sich in der Geschlossenstellung befindlichem Rundbügel in der Verriegelungsstellung in die Geschlossenstellung-Eingriffsvertiefung einzugreifen und den Rundbügel dadurch gegen eine Bewegung in die Offenstellung zu sichern.

Insbesondere kann daher vorgesehen sein, dass der Riegel bei in der Vorspannstellung positioniertem Nocken dazu ausgebildet ist, bei einem Erreichen der Geschlossenstellung unmittelbar in die Verriegelungsstellung zu gelangen und in die Geschlossenstellung-Eingriffsvertiefung einzuschnappen, um den Rundbügel dadurch gegen eine Bewegung in Richtung der Offenstellung zu blockieren.

Die Steuereinrichtung kann bei einigen Ausführungsformen dazu ausgebildet sein, ausgehend von der Offenstellung des Rundbügels aufgrund eines empfangenen Schließbefehls
- zunächst den Elektromotor zum Drehen des Nockens in die Freigabestellung anzusteuern und dadurch den Riegel in die Entriegelungsstellung zu bewegen,
- sodann den Elektromotor zum Drehen des Nockens in die Vorspannstellung anzusteuern und
- in Ansprechen auf eine Detektion der Geschlossenstellung des Rundbügels durch den Bügeldetektor den Elektromotor zum Drehen des Nockens in die Sperrstellung anzusteuern.

Bei solchen Ausführungsformen kann somit die Möglichkeit, den Riegel einzig durch Drehen des Nockens wahlweise in der Verriegelungsstellung sperren, für eine Bewegung aus der Verriegelungsstellung heraus freigeben oder in die Entriegelungsstellung bewegen zu können, bei der Steuerung des Rahmenschlosses während eines Überführens des Rundbügels von der Offenstellung in die Geschlossenstellung gezielt genutzt werden. Dazu kann die Steuereinrichtung dazu ausgebildet sein, aufgrund eines empfangenen Schließbefehls bei sich in der Offenstellung befindendem Rundbügel zunächst den Elektromotor zum Drehen in die Freigabestellung anzusteuern und dadurch den Riegel in die Entriegelungsstellung zu bewegen. Insbesondere kann der Rundbügel durch dieses Bewegen des Riegels in die Entriegelungsstellung für eine Bewegung in die Geschlossenstellung freigebbar sein.

Ein Nutzer kann sodann beispielsweise beginnen, den Rundbügel, insbesondere entgegen einer Vorspannung, in Richtung der Geschlossenstellung zu bewegen, und die Steuereinrichtung kann den Elektromotor zum Drehen des Nockens in die Vorspannstellung ansteuern. Dadurch kann der Riegel insbesondere während eines weiteren Bewegens des Rundbügels in Richtung der Geschlossenstellung an dem Rundbügel entlang gleiten, um bei Erreichen der Geschlossenstellung aufgrund der Vorspannung beispielsweise in die vorstehend erwähnte Geschlossenstellung-Eingriffsvertiefung einzuschnappen und den Rundbügel in der Geschlossenstellung zu sichern. Insbesondere kann die Steuereinrichtung dazu ausgebildet sein, den Elektromotor zum Drehen des Nockens in die Vorspannstellung anzusteuern, wenn der Rundbügel aus der Offenstellung heraus bewegt wurde.

Durch die Ausbildung des Rahmenschlosses mit einem Bügeldetektor kann das Erreichen der Geschlossenstellung erfasst und insbesondere ein entsprechendes Signal an die Steuereinrichtung übermittelt werden, welche daraufhin den Elektromotor zum Drehen des Nockens in die Sperrstellung ansteuern und den Riegel dadurch in der Verriegelungsstellung, insbesondere gegen die Hammerschlag-Methode, sichern kann. Ein Nutzer muss somit ausschließlich den Schließbefehl übermitteln und den Rundbügel in die Geschlossenstellung überführen, woraufhin die Sicherung des Rundbügels gegen eine Bewegung in die Offenstellung durch Einschnappen des Riegels in die Geschlossenstellung-Eingriffsvertiefung und darauffolgend die zuverlässige Verriegelung des Rundbügels in der Geschlossenstellung durch Drehen des Nockens in die Sperrstellung vollständig automatisch erfolgen können.

Insbesondere kann die Steuereinrichtung dazu ausgebildet sein, den Elektromotor bei einem Erreichen der Vorspannstellung anzuhalten und erst infolge der Detektion der Geschlossenstellung zum weiteren Drehen des Nockens anzusteuern. Daher kann der Nocken bei dem beschriebenen Steuerzyklus zum Bewegen des Rundbügels aus der Offenstellung in die Geschlossenstellung insbesondere nicht kontinuierlich drehen, sondern zumindest kurzzeitig in den jeweiligen Stellungen, der Entriegelungsstellung und der Vorspannstellung, verharren.

Beispielsweise kann das Rahmenschloss einen Funkempfänger aufweisen, um den Schließbefehl über eine kabellose Verbindung empfangen zu können. Insbesondere kann es sich bei einer solchen Funkverbindung um eine Mobilfunkverbindung, eine WLAN/WiFi-Verbindung und/oder eine Bluetooth-Verbindung handeln. Ferner kann das Rahmenschloss dazu ausgebildet sein, den Schließbefehl von einem Smartphone zu empfangen. Ferner kann beispielsweise auch vorgesehen sein, dass der Funkempfänger dazu ausgebildet ist, mit einem eigens dazu eingerichteten und dem Rahmenschloss zugeordneten Handsender und/oder mit einer dem Rahmenschloss zugeordneten Fernbedienung zu kommunizieren.

Die Steuereinrichtung des Rahmenschlosses kann bei einigen Ausführungsformen auch mit einer Steuereinheit eines E-Bikes verbunden und/oder verbindbar sein, um den Schließbefehl von einer solchen Steuereinheit empfangen zu können. Hierbei kann grundsätzlich eine Kommunikation zwischen der Steuereinheit des E-Bikes und der Steuereinrichtung des Rahmenschlosses über eine Funkverbindung und/oder über eine Kabelverbindung vorgesehen sein.

Zudem kann bei einigen Ausführungsformen eine verschlüsselte Übertragung eines Signals zum Übermitteln des Schließbefehls vorgesehen sein.

Alternativ zu einem derartigen Empfang kann das Rahmenschloss auch dazu ausgebildet sein, den Schließbefehl durch Eingabe eines Zahlencodes oder eines biometrischen Codes, beispielsweise eines Fingerabdrucks, zu empfangen, wozu an dem Rahmenschloss entsprechende Eingabeeinrichtungen vorgesehen sein können. Grundsätzlich kann der Schließbefehl ein Befehl sein, durch welchen ein Nutzer anzeigen kann, dass Rahmenschloss schließen und den Rundbügel in die Geschlossenstellung überführen zu wollen. Der Schließbefehl kann sich daher auch situationsabhängig infolge eines empfangen Befehls zum Bewegen des Riegels in die Entriegelungsstellung ergeben, wenn sich der Rundbügel zum Zeitpunkt des Empfangs dieses Befehls in der Offenstellung befindet, da in diesem Fall das Rahmenschloss offenbar gesperrt und der Rundbügel in die Geschlossenstellung überführt werden soll.

Bei einigen Ausführungsformen kann der Nocken um eine Motordrehachse des Elektromotors drehbar sein. Bei solchen Ausführungsformen kann folglich die Drehachse der Motordrehachse entsprechen, ohne dass der Nocken jedoch zwangsläufig unmittelbar mit einer Motorwelle des Elektromotors verbunden sein muss. Vielmehr kann beispielsweise bei einigen Ausführungsformen auch ein Getriebe zwischen dem Elektromotor und dem Nocken wirksam sein, insbesondere ein koaxial aufgebautes Getriebe, wobei durch ein solches Getriebe insbesondere eine Übersetzung der Drehzahl des Elektromotors ins Langsame erfolgen kann.

Ferner kann bei einigen Ausführungsformen vorgesehen sein, dass der Nocken um eine parallel zu der Motordrehachse des Elektromotors ausgerichtete Drehachse drehbar ist. Auch bei solchen Ausführungsformen kann der Nocken beispielsweise über ein Getriebe mit dem Elektromotor verbunden sein.

Bei einigen Ausführungsformen kann der Elektromotor im Wesentlichen tangential zu dem Rundbügel angeordnet sein. Eine solche tangentiale Anordnung des Elektromotors kann insbesondere eine Ausbildung des Rahmenschlosses bei geringer Bauhöhe ermöglichen, um das Rahmenschloss platzsparend an einem Rahmen des Fahrrads anbringen zu können.

Zudem können der Elektromotor, der Nocken und der Riegel bei einigen Ausführungsformen entlang der Drehachse betrachtet in dieser Reihenfolge hintereinander angeordnet sein.

Der Nocken kann bei einigen Ausführungsformen einen Steuerfortsatz aufweisen, mit welchem der Nocken in die Steueröffnung eingreift. Insbesondere kann der Steuerfortsatz bei einigen Ausführungsformen in Richtung des Riegels von einer Steuerplatte des Nockens wegragen, um in die Steueröffnung eingreifen und entlang der Kontur der Steueröffnung führbar sein zu können. Beispielsweise kann eine solche Steuerplatte um die Drehachse schwenkbar sein, wobei der Steuerfortsatz beispielsweise an einem bezüglich der Drehachse radialen Ende einer solchen schwenkbaren Steuerplatte angeordnet sein kann, um eine exzentrische Drehbewegung ausführen zu können. Ferner kann der Steuerabschnitt bei einigen Ausführungsformen auch auf einer scheibenförmigen Steuerplatte und exzentrisch zu der Drehachse angeordnet sein, so dass die Steuerplatte bei solchen Ausführungsformen als um die Drehachse drehbare Scheibe ausgebildet sein kann.

Die Steueröffnung kann bei einigen Ausführungsformen einen Vorspannabschnitt aufweisen, welcher entlang einer Bewegungsrichtung des Riegels eine erste Ausdehnung aufweist. Zudem kann die Steueröffnung einen Verriegelungsabschnitt aufweisen, welcher entlang der Bewegungsrichtung des Riegels eine gegenüber der ersten Ausdehnung kleinere zweite Ausdehnung aufweist, wobei der Steuerfortsatz des Nockens in der Vorspannstellung in dem Vorspannabschnitt und in der Freigabestellung sowie in der Sperrstellung in dem Verriegelungsabschnitt angeordnet sein kann.

Wie bereits erwähnt, kann die Bewegungsrichtung des Riegels radial zu dem Rundbügel und senkrecht zu der Drehachse des Nockens ausgerichtet sein. Indem der Nocken in der Vorspannstellung in dem Vorspannabschnitt der Steueröffnung angeordnet sein kann, kann der Riegel in der Vorspannstellung zwischen der Verriegelungsstellung und der Entriegelungsstellung bewegbar sein, ohne dass der Steuerfortsatz zuvor an einer Begrenzung der Steueröffnung anschlägt. Hingegen kann der im Vergleich zu dem Vorspannabschnitt geringer entlang der Bewegungsrichtung des Riegels ausgedehnte Verriegelungsabschnitt ermöglichen, dass der Steuerfortsatz im Zuge des Drehens des Nockens an einer jeweiligen Begrenzung von einander bezüglich der Bewegungsrichtung des Riegels entgegengesetzten Begrenzungen der Steueröffnung anschlägt, um den Riegel bei einem Drehen in die Freigabestellung in die Entriegelungsstellung anzutreiben oder durch ein Drehen in die Sperrstellung in der Verriegelungsstellung zu sichern.

Bei einigen Ausführungsformen kann die Ausdehnung des Verriegelungsabschnitts entlang der Bewegungsrichtung des Riegels geringer sein als ein Abstand zwischen einer Position des Steuerfortsatzes in der Sperrstellung und einer Position des Steuerfortsatzes in der Freigabestellung. Durch eine derartige Bemessung des Verriegelungsabschnitts kann erreicht werden, dass der Steuerabschnitt beispielsweise bei einer Bewegung von der Sperrstellung in die Freigabestellung an einer Begrenzung des Verriegelungsabschnitts anschlagen und im Zuge eines Weiterdrehens in die Freigabestellung den Riegel entgegen der Vorspannung in die Entriegelungsstellung verdrängen kann.

Bei einigen Ausführungsformen kann der Steuerfortsatz in der Freigabestellung an einer dem Rundbügel abgewandten Begrenzung der Steueröffnung und in der Sperrstellung an einer dem Rundbügel zugewandten Begrenzung der Steueröffnung anliegen. Insbesondere kann durch das Anliegen des Steuerfortsatzes an der dem Rundbügel zugewandten Begrenzung in der Sperrstellung erreicht werden, dass der Riegel durch den Steuerfortsatz gegen eine von dem Rundbügel weg führende Bewegung blockiert ist, um den Riegel dadurch in der Verriegelungsstellung zu sichern. Hingegen kann der Steuerfortsatz im Zuge eines Drehens in die Freigabestellung an einer dem Rundbügel abgewandten Begrenzung der Steueröffnung anschlagen und durch Zusammenwirken mit dieser Begrenzung den Riegel entgegen der Vorspannung in die Entriegelungsstellung verdrängen.

Allgemein kann die Kontur der Steueröffnung daher durch eine Begrenzung der Steueröffnung gebildet sein. Die Steueröffnung kann ferner als eine Öffnung in dem Riegel nach Art eines Fensters ausgebildet sein, welche außen durch eine die Kontur der Steueröffnung definierende Begrenzung begrenzt ist.

Der Riegel kann bei einigen Ausführungsformen als ein flaches Blech ausgebildet sein. Auch hierdurch kann eine kompaktere Ausbildung des Rahmenschlosses erreicht werden.

Der Riegel kann bei einigen Ausführungsformen eine dem Rundbügel zugewandte konkav abgerundete Aussparung aufweisen. Insbesondere kann die Aussparung dazu ausgebildet sein, in der Verriegelungsstellung des Riegels einen hierzu komplementär konvex abgerundeten Abschnitt des Rundbügels zu umgreifen.

Der Rundbügel kann bei einigen Ausführungsformen den konvex abgerundeten Abschnitt des Rundbügels einschließende Führungsabschnitte aufweisen, wobei die Geschlossenstellung-Eingriffsvertiefung an den Führungsabschnitten und/oder in der Umgebung der Führungsabschnitte ausgebildet sein kann. Insbesondere können einander bezüglich der Drehachse entgegengesetzte Seitenflächen des Riegels, welche die erwähnte abgerundete Aussparung umgeben können, in der Verriegelungsstellung an Begrenzungen der Geschlossenstellung-Eingriffsvertiefung anschlagen, um eine Bewegung der Rundbügels zu verhindern.

Ferner kann der Riegel bei einigen Ausführungsformen seitliche Zentrierungsaussparungen aufweisen, welche dazu ausgebildet sind, den Riegel während eines Entlanggleitens an dem Rundbügel in der Vorspannstellung an den Führungsabschnitten des Rundbügels abzustützen und/oder die Führungsabschnitte seitlich einzufassen.

Der Rundbügel kann bei einigen Ausführungsformen in die Offenstellung vorgespannt sein. Zum Überführen des Rundbügels aus der Offenstellung in die Geschlossenstellung kann bei solchen Ausführungsform daher eine manuell zu betätigende Handhabe vorgesehen sein, mittels derer der Rundbügel entgegen der Vorspannung in die Geschlossenstellung überführbar sein kann. Hingegen kann der Rundbügel ausgehend von der Geschlossenstellung automatisch aufgrund der Vorspannung in die Offenstellung überführbar sein, sofern der Riegel mittels des Nockens, insbesondere in Ansprechen auf einen Öffnungsbefehl, in die Entriegelungsstellung und außer Eingriff zu der Geschlossenstellung-Eingriffsvertiefung überführt wurde. Darüber hinaus kann durch eine solche Vorspannung erreicht werden, dass der Rundbügel beispielsweise bei einem unvollständigen Überführen in die Geschlossenstellung automatisch wieder in die Offenstellung gelangt, so dass ein Nutzer wahrnehmen kann, dass das Rahmenschloss nicht in die Geschlossenstellung überführt und daher beispielsweise ein durch das Rahmenschloss sicherbares Fahrrad noch nicht gegen ein Wegfahren gesperrt ist.

Der Bügeldetektor kann bei einigen Ausführungsformen dazu ausgebildet sein, die Offenstellung zu detektieren. Bei solchen Ausführungsformen kann der Steuereinrichtung daher insbesondere sowohl ein Signal übermittelt werden, wenn sich der Rundbügel in der Geschlossenstellung befindet, als auch dann, wenn sich der Rundbügel in der Offenstellung befindet. Die Steuereinrichtung kann dazu ausgebildet sein, die Signale des Bügeldetektors bei der Ansteuerung des Elektromotors zu berücksichtigen und/oder die Geschlossenstellung von der Offenstellung anhand der Signale zu unterscheiden.

Der Rundbügel kann bei einigen Ausführungsformen eine Offenstellung-Eingriffsvertiefung aufweisen und der Riegel kann dazu ausgebildet sein, bei sich in der Offenstellung befindlichem Rundbügel in der Verriegelungsstellung in die Offenstellung-Eingriffsvertiefung einzugreifen und den Rundbügel dadurch gegen eine Bewegung in die Geschlossenstellung zu sichern.

Insbesondere kann ein solches Sichern des Rundbügels in der Offenstellung eine ungewollte Bewegung des Rundbügels in die Geschlossenstellung, beispielsweise während einer Fahrt mit dem Fahrrad, verhindern. Bei solchen Ausführungsformen kann der Rundbügel - insbesondere, wenn der Rundbügel zusätzlich in Richtung der Offenstellung vorgespannt ist - stets in zwei klar definierten Positionen und entweder in der Geschlossenstellung oder in der Offenstellung angeordnet sein, indem der Rundbügel in diesen beiden Stellungen durch den Riegel gegen eine Bewegung in die jeweilige andere Stellung sicherbar sein kann.

Die Steuereinrichtung kann bei einigen Ausführungsformen dazu ausgebildet sein, nach des Empfangens des Schließbefehl den Elektromotor nach einer vorgegebenen oder vorgebbaren Wartezeit zum Bewegen des Nockens in die Sperrstellung anzusteuern, sofern der Bügeldetektor nach der vorgegebenen oder vorgebbaren Wartezeit die Offenstellung detektiert.

Bei solchen Ausführungsformen kann die Steuereinrichtung folglich dazu ausgebildet sein, zu überprüfen, ob der Rundbügel infolge eines Schließbefehls tatsächlich aus der Offenstellung herausbewegt wurde, oder ob der Rundbügel in der Offenstellung belassen wurde. Detektiert der Bügeldetektor nach der Wartezeit nach wie vor die Offenstellung, wurde Rundbügel trotz des empfangenen Schließbefehls nicht bewegt. Durch das Ansteuern des Elektromotors zum Bewegen des Nockens in die Sperrstellung kann in solchen Situationen erreicht werden, dass der Riegel wiederum in der Verriegelungsstellung blockiert und der Rundbügel dadurch in der Offenstellung gesichert wird. Ein ungewolltes Verbleiben des Riegels in der Entriegelungsstellung und dadurch bedingtes Freigeben des Rundbügels für eine Bewegung in die Geschlossenstellung, was beispielsweise zu einer Bewegung des Rundbügels aufgrund von während einer Fahrt mit dem Fahrrad auftretenden Erschütterungen führen könnte, kann dadurch vermieden werden.

Beispielsweise kann die Wartezeit herstellerseitig in der Steuereinrichtung, beispielsweise in einem nicht-flüchtigen Speicher der Steuereinrichtung, hinterlegt und dadurch vorgegeben sein. Es kann jedoch auch vorgesehen sein, dass ein Nutzer die Wartezeit selbst vorgeben und beispielsweise in einen solchen Speicher einschreiben kann. Die Wartezeit kann beispielsweise in einem Bereich von 1 s bis 30 s liegen, wobei jedoch grundsätzlich auch andere Wartezeiten, etwa im Bereich von einer Minute, vorgegeben oder vorgebbar sein können. Insbesondere eine frei vorgebbare Wartezeit kann zudem auch eine unbeschränkte Einstellung der Wartezeit ermöglichen. Beispielsweise kann die Wartezeit durch eine Einstellung an einem Smartphone anpassbar sein, wobei der gewählte Wert der Wartezeit über eine Funkverbindung an einen Funkempfänger des Rahmenschlosses übermittelbar sein kann.

Ferner kann die Steuereinrichtung bei einigen Ausführungsformen dazu ausgebildet sein, den Elektromotor nach dem Drehen des Nockens in die Freigabestellung erst in Ansprechen auf ein Signal des Bügeldetektors zum Drehen des Nockens in die Vorspannstellung anzusteuern, welches eine Bewegung des Rundbügels aus der Offenstellung kennzeichnet.

Insbesondere kann es sich bei einem solchen Signal, welches eine Bewegung des Rundbügels aus der Offenstellungstellung kennzeichnet, um eine Unterbrechung eines Signals des Bügeldetektors handeln, durch welches der Steuereinrichtung die Anordnung des Rundbügels in der Geschlossenstellung mitgeteilt wird. Alternativ oder zusätzlich kann der Bügeldetektor jedoch auch einen weiteren Sensor umfassen, um den Rundbügel zwischen der Offenstellung und der Geschlossenstellung zu erfassen, wobei die Steuereinrichtung dazu ausgebildet sein kann, in Ansprechen auf ein Signal des weiteren Sensors den Elektromotor zum Drehen des Nockens in die Vorspannstellung anzusteuern.

Insbesondere kann bei solchen Ausführungsformen vorgesehen sein, dass die Steuereinrichtung dazu ausgebildet ist, den Nocken nach dem Empfang des Schließbefehls in der Freigabestellung zu halten, bis entweder eine Bewegung in Richtung der Geschlossenstellung erfolgt ist oder die Wartezeit verstrichen ist. In dem ersten Fall kann die Steuereinrichtung den Elektromotor daraufhin zum Drehen des Nockens in die Vorspannstellung ansteuern, um ein Einschnappen in die Geschlossenstellung-Eingriffsvertiefung zu ermöglichen, wohingegen die Steuereinrichtung den Elektromotor in dem zweiten Fall zum Drehen des Nockens in die Sperrstellung ansteuern kann, um den Rundbügel wieder in der Offenstellung zu sichern.

Die Steuereinrichtung kann bei einigen Ausführungsformen dazu ausgebildet sein, ausgehend von der Geschlossenstellung des Rundbügels aufgrund eines empfangenen Öffnungsbefehls zunächst den Elektromotor zum Bewegen des Nockens in die Freigabestellung anzusteuern und dadurch den Riegel in die Entriegelungsstellung zu bewegen. Zudem kann die Steuereinrichtung dazu ausgebildet sein, daraufhin in Ansprechen auf eine Detektion der Offenstellung des Rundbügels durch den Bügeldetektor den Elektromotor zum Drehen des Nockens in die Sperrstellung anzusteuern.

Auch der Öffnungsbefehl kann beispielsweise an einem Funkempfänger des Rahmenschlosses empfangbar und/oder mittels eines Smartphones übermittelbar sein. Der Öffnungsbefehl kann insbesondere einem Befehl entsprechen, durch welchen ein Nutzer des Schlosses angeben kann, den Rundbügel von der Geschlossenstellung in die Offenstellung übermitteln zu wollen und kann grundsätzlich auf die gleiche Art wie der Schließbefehl übermittelbar sein. Insbesondere bei Ausführungsformen, bei welchen der Rundbügel in Richtung der Offenstellung vorgespannt ist, kann der Rundbügel infolge des Drehens des Nockens in die Freigabestellung und des Bewegens des Riegels in die Entriegelungsstellung automatisch von der Geschlossenstellung in die Offenstellung gelangen, wobei der Riegel daraufhin durch Drehen des Nockens in die Sperrstellung nach dem Detektieren der Offenstellung durch den Bügeldetektor automatisch in der Verriegelungsstellung gesichert und der Rundbügel gegen eine Bewegung in die Offenstellung blockiert werden kann.

Die Steuereinrichtung kann bei einigen Ausführungsformen auch dazu ausgebildet sein, den Elektromotor nach einer vorgegebenen oder vorgebbaren Wartezeit nach dem Öffnungsbefehl zum Bewegen des Nockens in die Sperrstellung anzusteuern, wenn der Bügeldetektor die Geschlossenstellung detektiert. Insofern kann auch nach einem Empfang eines Öffnungsbefehls vorgesehen sein, den Riegel wieder in der Verriegelungsstellung zu sichern, wenn trotz des Öffnungsbefehls nach Ablauf der Wartezeit keine Bewegung aus der Geschlossenstellung heraus erfolgt ist. Insbesondere kann dies bei Ausführungsformen vorgesehen sein, bei welchen der Rundbügel nicht in die Offenstellung vorgespannt ist, sondern bewusst und insbesondere manuell durch Betätigen einer Handhabe aus der Geschlossenstellung in die Offenstellung bewegt werden muss.

Bei einigen Ausführungsformen kann zudem vorgesehen sein, dass der Nocken über die Vorspannstellung von der Freigabestellung in die Sperrstellung drehbar ist. Bei solchen Ausführungsformen kann daher vorgesehen sein, dass der Nocken zum Drehen von der Freigabestellung in die Sperrstellung ohnehin über die Vorspannstellung gedreht werden muss, so dass der Nocken nach dem Überführen des Riegels in die Entriegelungsstellung stets entlang einer gleichbleibenden Drehrichtung gedreht werden kann, um letztlich die Sperrstellung zu erreichen. Die Drehung des Nockens muss dabei jedoch nicht kontinuierlich erfolgen, sondern die Steuereinrichtung kann dazu ausgebildet sein, den Nocken durch entsprechendes Ansteuern des Elektromotors in der Vorspannstellung anzuhalten und erst in Ansprechen auf ein Signal von dem Bügeldetektor, welcher den Rundbügel in der Geschlossenstellung detektiert, durch Ansteuern des Elektromotors in die Sperrstellung zu drehen. Bei einem Überführen des Rundbügels von der Geschlossenstellung in die Offenstellung kann hingegen - insbesondere, sofern der Rundbügel in die Offenstellung vorgespannt ist - vorgesehen sein, dass die Steuereinrichtung dazu ausgebildet ist, den Elektromotor bei einem Erfassen der Offenstellung zu einem kontinuierlichen Drehen des Nockens von der Freigabestellung in die Sperrstellung anzusteuern.

Bei Ausführungsformen ohne Vorspannung des Rundbügels kann jedoch auch infolge des Öffnungsbefehls vorgesehen sein, den Nocken nach einem Verlassen der Geschlossenstellung in die Vorspannstellung zu drehen, um ein Einschnappen des Riegels in die Offenstellung-Eingriffsvertiefung beim Erreichen der Offenstellung zu ermöglichen, und den Nocken erst danach ausgehend von der Vorspannstellung in die Sperrstellung zu drehen.

Insbesondere kann die Steuereinrichtung bei Ausführungsformen, bei welchen der Rundbügel nicht in Richtung der Offenstellung vorgespannt ist, dazu ausgebildet sein, den Elektromotor nach dem Drehen des Nockens in die Freigabestellung aufgrund des empfangenen Öffnungsbefehls erst in Ansprechen auf ein Signal des Bügeldetektors zum Drehen des Nockens in die Vorspannstellung anzusteuern, welches eine Bewegung des Rundbügels aus der Geschlossenstellung kennzeichnet. Dadurch kann der Riegel beim Erreichen der Offenstellung in eine Offenstellung-Eingriffsvertiefung einschnappen, wobei die Steuereinrichtung den Elektromotor daraufhin in Ansprechen auf eine Detektion der Offenstellung des Rundbügels zum Drehen des Nockens in die Sperrstellung anzusteuern kann.

Beispielsweise kann die Steuereinrichtung den Elektromotor dazu zum Drehen des Nockens in die Vorspannstellung ansteuern, wenn der Bügeldetektor kein Signal mehr aussendet, welches auf eine Anordnung der Rundbügels in der Geschlossenstellung hinweist, so dass das Unterbrechen dieses Signals eine Bewegung des Rundbügels aus der Geschlossenstellung heraus kennzeichnen kann. Ferner kann bei einigen Ausführungsformen auch der vorstehend bereits erwähnte weitere Sensor und/oder noch ein weiterer Sensor vorgesehen sein, um das Verlassen der Geschlossenstellung zu detektieren.

Bei einigen Ausführungsformen kann der Elektromotor lediglich zum Bewegen des Nockens zwischen der Freigabestellung und der Sperrstellung ausgebildet sein. Insbesondere kann der Nocken um 180 Grad von der Freigabestellung in die Sperrstellung drehbar sein, und umgekehrt.

Zudem kann die Vorspannstellung bei einigen Ausführungsformen durch eine Drehung des Nockens um 90 Grad ausgehend von der Sperrstellung und ausgehend von der Freigabestellung erreichbar sein.

Die Sperrstellung kann ferner bei einigen Ausführungsformen durch eine Drehstellung des Nockens definiert sein, in welcher der Nocken und/oder ein Steuerfortsatz des Nockens in radialer Richtung einen minimalen Abstand zu dem Rundbügel aufweist, wohingegen die Freigabestellung durch eine Drehstellung des Nockens definiert sein kann, in welcher der Nocken und/oder der Steuerfortsatz in radialer Richtung einen maximalen Abstand zu dem Rundbügel aufweist. Sofern die Sperrstellung und die Freigabestellung um 180 Grad zueinander und die Vorspannstellung um 90 Grad versetzt zu diesen Stellungen angeordnet sind, kann der Nocken und/oder der Steuerfortsatz in der Vorspannstellung insbesondere in radialer Richtung einen mittleren Abstand zu dem Rundbügel bezogen auf den maximalen Abstand und den minimalen Abstand aufweisen, um eine Bewegung des Riegels zwischen der Entriegelungsstellung und der Verriegelungsstellung zu ermöglichen.

Ferner kann der Nocken bei einigen Ausführungsformen entlang einer ersten Drehrichtung von der Sperrstellung in die Freigabestellung und entlang einer der ersten Drehrichtung entgegengesetzten zweiten Drehrichtung von der Freigabestellung in die Sperrstellung drehbar sein.

Bei solchen Ausführungsformen kann die Drehung des Nockens somit auf eine Drehung zwischen der Freigabestellung und der Sperrstellung begrenzt sein, so dass die Freigabestellung und die Sperrstellung jeweilige Endstellungen des Nockens bezüglich dessen Drehungen definieren können. Insbesondere kann der Nocken daher stets über die Vorspannstellung drehbar sein, wenn der Nocken von der Freigabestellung in die Sperrstellung oder umgekehrt gedreht wird. Zudem können sich die Freigabestellung und die Sperrstellung bezüglich der Drehung des Nockens bei solchen Ausführungsformen diametral entgegengesetzt sein. Auch eine solche Begrenzung der Drehung des Nockens kann insbesondere eine kompakte Ausbildung des Rahmenschlosses ermöglichen, indem insbesondere die Steueröffnung keinen Raum für eine vollständige Drehung des Nockens um 360 Grad bereitstellen muss, sondern insbesondere senkrecht zu der Bewegungsrichtung des Riegels lediglich eine dem Bewegungsumfang des Nockens und insbesondere eines in die Steueröffnung eingreifenden Steuerfortsatzes des Nockens während der begrenzten Drehung entsprechende Ausdehnung aufweisen muss.

Der Bügeldetektor kann bei einigen Ausführungsformen wenigstens einen Permanentmagnet an dem Rundbügel und einen stationären Magnetfeldsensor umfassen. Insbesondere kann der stationäre Magnetfeldsensor in der Umgebung des Riegels angeordnet sein, um durch Detektieren des Permanentmagneten zu erfassen, wenn sich der Rundbügel in der Geschlossenstellung befindet. Dazu kann der Permanentmagnet insbesondere in der Umgebung der Geschlossenstellung-Eingriffsvertiefung angeordnet sein.

Zudem kann bei einigen Ausführungsformen vorgesehen sein, dass der Rundbügel wenigstens zwei Permanentmagnete aufweist, wobei eine Detektion eines ersten der beiden Permanentmagnete die Geschlossenstellung und eine Detektion eines zweiten der zwei Permanentmagnete die Offenstellung des Rundbügels kennzeichnet. Beispielsweise können die Permanentmagnete in der Umgebung der Geschlossenstellung-Eingriffsvertiefung und/oder der Offenstellung-Eingriffsvertiefung angeordnet sein.

Die wenigstens zwei Permanentmagnete können bei einigen Ausführungsformen eine gegensätzliche Ausrichtung der Polung aufweisen (Nord-Süd bzw. Süd-Nord). Bei solchen Ausführungsformen können die Permanentmagnete unterschiedliche Signale an dem Magnetfeldsensor auslösen, so dass die Steuereinrichtung anhand der empfangenen Signale unterscheiden kann, ob sich der Rundbügel in der Offenstellung oder in der Geschlossenstellung befindet.

Ferner kann der Bügeldetektor bei einigen Ausführungsformen beispielsweise einen mechanischen Kontaktschalter und/oder einen kapazitiven Näherungsschalter umfassen, um die Geschlossenstellung und/oder die Offenstellung detektieren zu können.

Bei einigen Ausführungsformen kann eine Motorwelle des Elektromotors mit einem Potentiometer verbunden und die Steuereinrichtung kann dazu ausgebildet sein, anhand der Signale des Potentiometers eine Drehstellung des Nockens zu bestimmen. Insbesondere kann die Steuereinrichtung dazu ausgebildet sein, eine sich infolge einer Drehung der Motorwelle des Elektromotors ändernde Spannung an dem Potentiometer zu erfassen und infolge der erfassten Spannung auf die Drehstellung des Nockens zurückzuschließen. Dies kann es insbesondere auch ermöglichen, die Vorspannstellung des Nockens zu detektieren, um den Elektromotor beispielsweise bei einem Erreichen der Vorspannstellung anhalten zu können. Ein derartiges Erfassen von Drehstellungen anhand der Signale eines Potentiometers ist dem Fachmann grundsätzlich bekannt, so dass hierauf nicht im Detail eingegangen werden muss.

Allgemein kann die Geschlossenstellung-Eingriffsvertiefung und/oder die erwähnte Offenstellung-Eingriffsvertiefung direkt in dem Rundbügel ausgebildet oder indirekt durch eine oder mehrere Erhebung(en) des Rundbügels gebildet sein.

Ferner wird die Offenbarung der DE 10 2005 041 268 A1 im Hinblick auf die grundsätzliche Ausbildung eines Rahmenschlosses explizit in die vorliegende Offenbarung mit einbezogen und die darin erläuterten Merkmale können auch bei Ausführungsformen des Rahmenschlosses der hierin offenbarten Art verwirklicht sein, sofern diese den vorstehenden Erläuterungen nicht widersprechen.

Die Erfindung wird im Folgenden rein beispielhaft anhand eines Ausführungsbeispiels unter Bezugnahme auf die Zeichnungen erläutert. Zunächst wird jedoch die grundsätzliche Funktionsweise eines elektronischen Rahmenschlosses anhand eines aus DE 10 2005 041 268 A1 bekannten Rahmenschlosses erläutert.

In den Figuren zeigen:
- Fig. 1A und 1B: eine jeweilige Darstellung eines elektronischen Rahmenschlosses aus dem Stand der Technik bei unterschiedlicher Stellung eines Riegels und eines Rundbügels des Rahmenschlosses;
- Fig. 2A bis 2C: jeweilige Darstellungen von Ausschnitten einer Ausführungsform eines elektronischen Rahmenschlosses gemäß der vorliegenden Offenbarung bei in einer Sperrstellung positioniertem Nocken, in einer Vorspannstellung positioniertem Nocken und in einer Freigabestellung positioniertem Nocken; und
- Fig. 3A: eine schematische Darstellung einer Steueröffnung des Riegels.

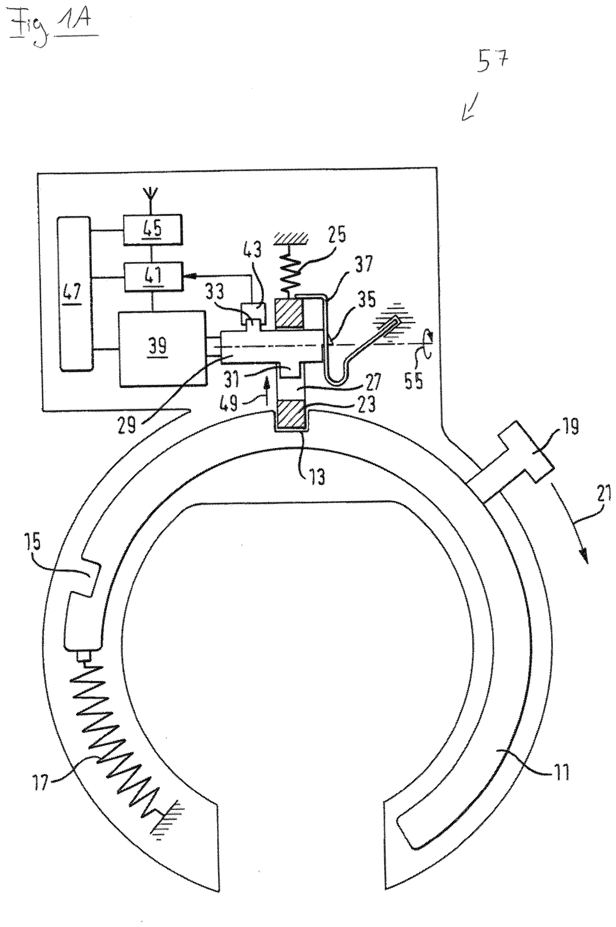

Fig. 1A zeigt schematisch den Aufbau eines Rahmenschlosses 57 zur Montage an den Hinterradstreben eines Fahrrads gemäß dem Stand der Technik DE 10 2005 041 268 A1. Das Rahmenschloss 57 besitzt einen Rundbügel 11 zum Umgreifen des Hinterrads. Der Rundbügel 11 besitzt eine Offenstellung-Eingriffsvertiefung 13 und eine Geschlossenstellung-Eingriffsvertiefung 15, und er ist mittels einer Zugfeder 17 in Richtung einer in Fig. 1A gezeigten Offenstellung vorgespannt. Solange der Rundbügel 11 nicht verriegelt ist, kann er mittels einer Handhabe 19 entgegen der Vorspannung entlang einer Schließrichtung 21 in Richtung einer Geschlossenstellung gedreht werden.

Mit dem Rundbügel 11 wirkt ein Riegel 23 zusammen, der von einer Druckfeder 25 in Richtung einer in Fig. 1A gezeigten Verriegelungsstellung vorgespannt wird. Der Riegel 23 besitzt eine zentrale Ausnehmung 27. In diese greift eine Welle 29 ein, die im Bereich des Riegels 23 einen Entriegelungsnocken 31 besitzt. An einem anderen Längsabschnitt besitzt die Welle 29 einen Schaltnocken 33. Die Vorderseite der Welle 29 ist als eine exzentrisch angeordnete schräge Fläche in Form einer Freigabenase 35 ausgebildet. Diese wirkt mit einer Blockierfeder 37 zusammen, wie nachfolgend noch erläutert wird.

Als Antriebseinrichtung für die Welle 29 ist ein Elektromotor 39 vorgesehen, der vorzugsweise ein integriertes oder aufgesetztes Getriebe für eine Übersetzung ins Langsame besitzt (nicht gezeigt). Der Elektromotor 39 wird von einer Steuereinrichtung 41 angesteuert. Diese ist eingangsseitig mit einem Kontaktschalter 43 verbunden, der mit dem Schaltnocken 33 der Welle 29 zusammenwirkt. Ferner ist die Steuereinrichtung 41 eingangsseitig mit einem Funkempfänger 45 verbunden. Eine Batterie 47 (oder Akkumulator) dient zur Energieversorgung des Elektromotors 39, der Steuereinrichtung 41 und des Funkempfängers 45.

Das in Fig. 1A gezeigte Rahmenschloss 57 dient zum Sichern des zugehörigen Fahrrads gegen eine unbefugte Benutzung. Hierfür kann der Rundbügel 11 ausgehend von der gezeigten Offenstellung in eine Geschlossenstellung gebracht werden, in der der Rundbügel in einen Zwischenraum zwischen zwei benachbarten Speichen des Hinterrads eingreift und das Hinterrad hierdurch blockiert.

Der Rundbügel 11 kann sowohl in der gezeigten Offenstellung als auch in der genannten Geschlossenstellung mittels des Riegels 23 verriegelt werden. Hierfür drängt die Druckfeder 25 den Riegel 23 in Richtung des Rundbügels 11. Solange die Welle 29 mit dem Entriegelungsnocken 31 den Riegel 23 hierfür freigibt, liegt der Riegel 23 deshalb an der Oberseite des Rundbügels 11 an oder greift in eine der beiden Eingriffsvertiefungen 13, 15 ein, falls diese sich auf Höhe des Riegels 23 befinden. Wenn der Riegel 23 in die Offenstellung-Eingriffsvertiefung 13 eingreift, ist der Rundbügel 11 in der Offenstellung gesichert, wie in Fig. 1A gezeigt ist. Falls hingegen der Riegel 23 in die Geschlossenstellung-Eingriffsvertiefung 15 eingreift, so entspricht dies der genannten Geschlossenstellung des Rundbügels 11.

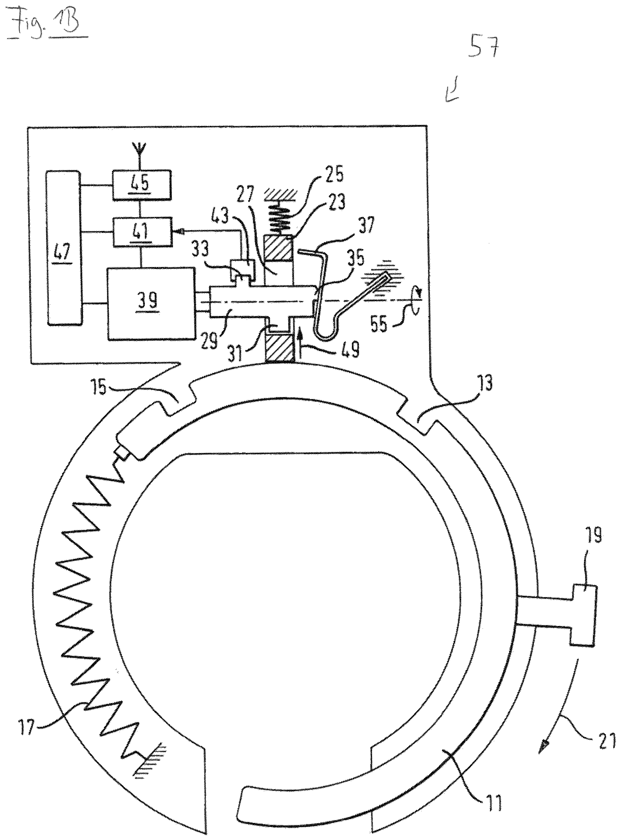

Durch Drehen der Welle 29 kann der Riegel 23 mittels des Entriegelungsnockens 31 kurzzeitig entlang einer Entriegelungsrichtung 49 entgegen der Vorspannung durch die Druckfeder 25 in eine Entriegelungsstellung gebracht werden. In dieser Entriegelungsstellung ist der Rundbügel 11 für eine Drehbewegung freigegeben. Insbesondere kann der Benutzer ausgehend von der Offenstellung gemäß Fig. 1A den Rundbügel 11 mittels der Handhabe 19 entlang der Schließrichtung 21 bewegen, um den Rundbügel 11 letztlich in die bereits erläuterte Geschlossenstellung zu überführen. Fig. 1B zeigt das Rahmenschloss während einer derartigen Bewegung des Rundbügels 11 in Schließrichtung 21. Falls zu diesem Zeitpunkt der Entriegelungsnocken 31 der Welle 29 den Riegel 23 bereits wieder freigibt und die Druckfeder 25 den Riegel 23 somit erneut in Richtung des Rundbügels 11 drängt, so beeinträchtigt dies nicht die weitere Schließbewegung des Rundbügels 11. Wie in Fig. 1B gezeigt ist, liegt der Riegel 23 nämlich lediglich so lange an der Oberseite des Rundbügels 11 an, bis die Geschlossenstellung-Eingriffsvertiefung 15 sich auf Höhe des Riegels 23 befindet. Sodann kann der Riegel 23 in die Geschlossenstellung-Eingriffsvertiefung 15 einschnappen, um den Rundbügel 11 in der somit erreichten Geschlossenstellung zu sichern.

Aus Fig. 1B ist auch die folgende Eigenschaft des gezeigten Rahmenschlosses 57 ersichtlich: Falls der Benutzer während der Schließbewegung des Rundbügels 11 - also während der Riegel 23 sich zwischen der Offenstellung-Eingriffsvertiefung 13 und der Geschlossenstellung-Eingriffsvertiefung 15 befindet - die Schließbetätigung nicht vollendet und der Riegel 23 somit nicht in Eingriff mit der Geschlossenstellung-Eingriffsvertiefung 15 gelangt, so zieht die Zugfeder 17 den Rundbügel 11 wieder zurück in die in Fig. 1A gezeigte Offenstellung, wobei der Riegel 23 aufgrund seiner Vorspannung sodann in die Offenstellung-Eingriffsvertiefung 13 schnappt (vgl. Fig. 1A). Der Rundbügel 11 ist hierdurch auch in diesen Fall gegen eine unbefugte oder unbeabsichtigte nachfolgende Schließbetätigung gesichert. Gleiches gilt auch für den Fall, dass in der in Fig. 1A gezeigten Offenstellung des Rundbügels 11 der Riegel 23 infolge eines vom Benutzer abgesetzten Schließbefehls zwar kurzzeitig entriegelt wird, der Rundbügel 11 während dieses Zeitintervalls jedoch überhaupt nicht in Schließrichtung 21 gedreht wird. In diesem Fall verbleibt der Rundbügel 11 also in der Offenstellung, und der Riegel 23 greift sofort wieder in die Offenstellung-Eingriffsvertiefung 13 ein, sobald der Riegel 23 aufgrund einer entsprechenden Drehbewegung der Welle 29 hierfür freigegeben worden ist.

Eine weitere Besonderheit des gezeigten Rahmenschlosses 57 liegt in der Blockierfeder 37. Solange der Riegel 23 sich - wie in Fig. 1A gezeigt - in der Verriegelungsstellung befindet, hintergreift die Blockierfeder 37 den Riegel 23. Dies gilt sowohl für die in Fig. 1A gezeigte Offenstellung als auch für die erläuterte Geschlossenstellung des Rundbügels 11. Solange die Blockierfeder 37 den Riegel 23 derartig hintergreift, ist dieser gegen eine unbefugte Entriegelungsbewegung nach der sogenannten "Hammerschlagmethode" gesichert. Um den Riegel 23 für eine (befugte) Bewegung in der Entriegelungsrichtung 49 freizugeben, wird die Blockierfeder 37 entgegen der von ihr ausgeübten Vorspannung kurzzeitig zurückgedrängt, um das freie Ende der Blockierfeder 37 außer Eingriff mit dem Riegel 23 zu bringen. Hierfür greift die Freigabenase 35 der Welle 29 an einer Zwangsführungsfläche 51 der Blockierfeder 37 an, die eine Blockieraussparung 53 der Blockierfeder 37 umgibt. Sobald die Freigabenase 35 jedoch in die Blockieraussparung 53 eingreift, kann die Blockierfeder 37 aufgrund ihrer Vorspannung den Riegel 23 in der erläuterten Weise hintergreifen (vgl. Fig. 1A).

In dem Zustand gemäß Fig. 1B liegt die Blockierfeder 37 übrigens noch seitlich an dem Riegel 23 an. Sobald jedoch der Riegel 23 sich wieder vollständig die Verriegelungsstellung begibt, schnappt die Blockierfeder 37 in die in Fig. 1A gezeigte Blockierstellung und hintergreift den Riegel 23 wieder.

Bei diesem Rahmenschloss 57 aus dem Stand der Technik ist somit in Form der Blockierfeder 37 ein von der Welle 29 und dem Entriegelungsnocken 31 gesondertes Element vorgesehen, um den Riegel 23 in der Verriegelungsstellung gegen eine Bewegung entgegen der Vorspannung und dadurch insbesondere gegen Aufbruchsversuche unter Verwendung der sogenannten Hammerschlag-Methode schützen zu können. Zudem ermöglicht die Vorspannung des Riegels 23 in die Verriegelungsstellung zwar grundsätzlich, dass der Riegel 23 bei Erreichen der Geschlossenstellung-Eingriffsvertiefung 15 in diese eingreift, jedoch setzt dies voraus, dass die Welle 29 beim Erreichen der Geschlossenstellung bereits ausreichend weit gedreht ist, um den Riegel 23 freizugeben. Ein Nutzer muss den Rundbügel 11 daher bis zu diesem ausreichenden Drehen der Welle 29 manuell in der Geschlossenstellung halten, um zu verhindern, dass der Rundbügel 11 aufgrund der Vorspannung durch die Zugfeder 17 wieder in die Offenstellung gelangt.

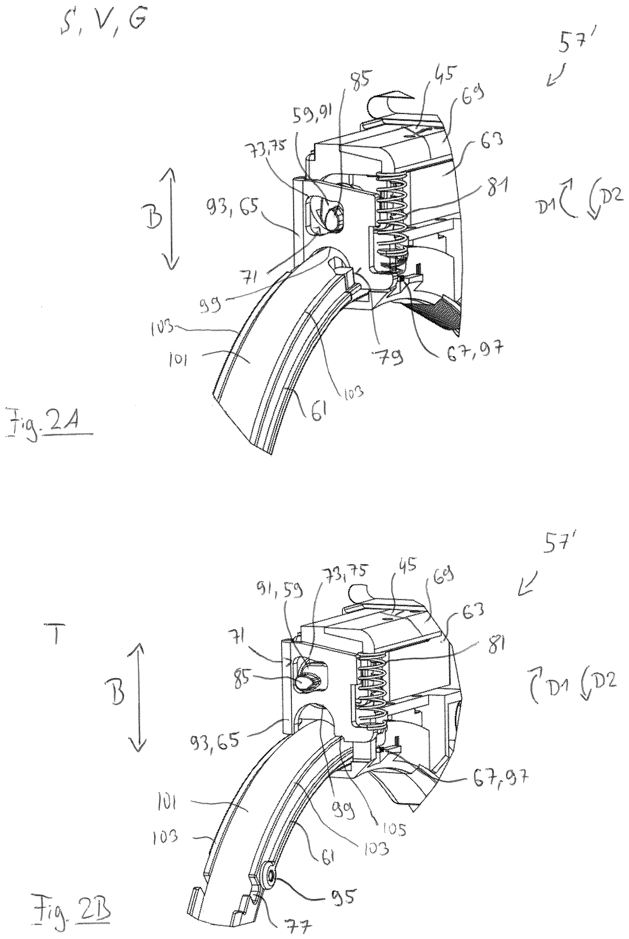

Insbesondere dieser Problematik begegnen die Ausführungsformen des hierin offenbarten Rahmenschlosses, wobei eine dieser Ausführungsformen anhand der Fig. 2A bis 3A veranschaulicht ist. Bei dieser Ausführungsform eines Rahmenschlosses 57` dient ein Nocken 59 und damit ein einziges Bauteil sowohl dazu, einen in eine Verriegelungsstellung V vorgespannten Riegel 65 entgegen der Vorspannung in eine Entriegelungsstellung E zu drängen, als auch dazu, den Riegel 65 in der Verriegelungsstellung V gegen eine Bewegung in Richtung der Verriegelungsstellung V zu sichern. Zudem ist ein Bügeldetektor 67 vorgesehen, welcher dazu ausgebildet ist, eine Geschlossenstellung G eines Rundbügels 61 zu detektieren, wobei das entsprechende Signal des Bügeldetektors 67 von einer Steuereinrichtung 69 dazu genutzt werden kann, den Nocken 59 zum Sichern des Riegels 65 in der Verriegelungsstellung V anzusteuern und den Rundbügel 11 dadurch gegen eine ungewollte Bewegung in eine Offenstellung O zu sichern. Die grundsätzliche Gestaltung des Rahmenschlosses 57' kann jedoch derjenigen des vorstehend erläuterten Rahmenschlosses 57 aus dem Stand der Technik entsprechen, sofern nachstehend nicht auf spezielle Merkmale hingewiesen wird. Daher können die Merkmale des vorstehend erläuterten Rahmenschlosses 57 aus dem Stand der Technik, welche die grundsätzliche Funktionsweise eines Rahmenschlosses betreffen, auch bei dem weiterentwickelten Rahmenschloss 57' gemäß den Fig. 2A bis 3A verwirklicht sein. Insbesondere kann daher beispielsweise auch bei dem Rahmenschloss 57' vorgesehen sein, dass dessen Rundbügel 61 in eine Offenstellung O vorgespannt ist.

Fig. 2A zeigt das Rahmenschloss 57' bei sich in der Geschlossenstellung G befindlichem Rundbügel 61. Der Rundbügel 61 ist in der Geschlossenstellung G durch den Riegel 65, welcher als ein flaches Blech 93 ausgebildet ist, gesichert, indem der in der Verriegelungsstellung V positionierte Riegel 65 in eine Geschlossenstellung-Eingriffsvertiefung 79 eingreift und den Rundbügel 61 dadurch gegen eine Drehbewegung blockiert. Die Geschlossenstellung-Eingriffsvertiefung 79 kann direkt in dem Rundbügel 61 ausgebildet oder indirekt durch eine oder mehrere Erhebung(en) des Rundbügels 61 gebildet sein.

Wie zudem aus Fig. 2A ersichtlich wird, weist der Riegel 65 eine dem Rundbügel 61 zugewandte konkav abgerundete Aussparung 99 auf, welche in der Verriegelungsstellung V einen konvex abgerundeten Abschnitt 101 des Rundbügels 61 umgreift. Die Geschlossenstellung-Eingriffsvertiefung 79 ist von seitlichen Führungsabschnitten 103 des Rundbügels 61 umgeben.

Der Riegel 65 weist ferner eine Steueröffnung 71 auf, in welche ein Steuerfortsatz 85 des durch einen Elektromotor 63 drehbaren Nockens 59 eingreift. Der Steuerfortsatz 85 ragt in Richtung des Riegels 65 von einer Steuerplatte 91 des Nockens 59 weg und ist durch Drehen des Nockens 59 zu einer exzentrischen Drehbewegung um eine Motordrehachse des Elektromotors 63 antreibbar. Dies ermöglicht es, den Riegel 65 durch Drehen des Nockens 59 gemäß der Drehbewegung des Nockens 59 und einer Kontur 73 der Steueröffnung 71, welche durch deren äußere Begrenzung 75 gebildet ist, geradlinig entlang einer Bewegungsrichtung B zu bewegen, welche radial zu dem Rundbügel 61 und senkrecht zu einer Drehachse ausgerichtet ist, um welche die Drehbewegung des Nockens 59 erfolgt. Die Steuerplatte 91 ist bei der hier gezeigten Ausführungsform um die Drehachse des Nockens 59 bzw. die Motordrehachse des Elektromotors 63 schwenkbar und der Steuerfortsatz 85 ist an einem radialen Ende der Steuerplatte 91 bezüglich deren Schwenkbewegung angeordnet.

In der Darstellung gemäß Fig. 2A befindet sich der Rundbügel 61 in der Geschlossenstellung G und der Riegel 65 in der Verriegelungsstellung V, in welcher der Riegel 65 in die Geschlossenstellung-Eingriffsvertiefung 79 eingreift. Der Riegel 65 ist durch eine Druckfeder 81 in Richtung der Verriegelungsstellung V vorgespannt, so dass der Riegel 65 entgegen dieser Vorspannung bewegt werden müsste, um den Riegel 65 außer Eingriff zu der Geschlossenstellung-Eingriffsvertiefung 79 bringen zu können. Um den Riegel 65 jedoch in der Verriegelungsstellung V zu sichern, ist der Nocken 59 durch entsprechende Ansteuerung des Elektromotors 63 in eine Sperrstellung S gedreht, in welcher der Steuerfortsatz 85 an einer dem Rundbügel 61 zugewandten Begrenzung 75 der Steueröffnung 71 anliegt und dadurch eine Bewegung des Riegels 65 entgegen der Vorspannung durch die Druckfeder 81 blockiert.

Um es einem berechtigten Nutzer zu ermöglichen, das Rahmenschloss 57' zu versperren und den Rundbügel 61 in die in Fig. 2A gezeigte Geschlossenstellung G zu überführen, weist das Rahmenschloss 57' eine Steuereinrichtung 69 auf, welche dazu ausgebildet ist, den Elektromotor 63 anzusteuern und dadurch den Nocken 59 anzutreiben. Zudem ist auch bei dem hier gezeigten Rahmenschloss 57' ein Funkempfänger 45 vorgesehen, um beispielsweise einen Schließbefehl von einem Smartphone empfangen zu können, gemäß welchem das Rahmenschloss 57' gesperrt und der Rundbügel 61 in die Geschlossenstellung G überführt werden soll.

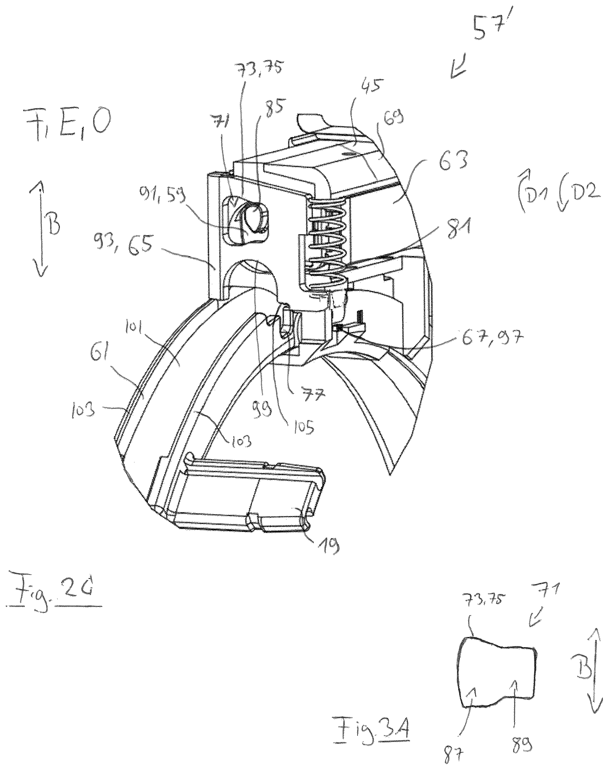

Die Steuereinrichtung 69 kann dazu ausgebildet sein, in Ansprechen auf einen solchen Schließbefehl und ausgehend von der in Fig. 2C veranschaulichten Offenstellung O, den Elektromotor 63 zunächst zum Drehen des Nockens 59 in eine ebenfalls in Fig. 2C veranschaulichte Freigabestellung F anzusteuern. Der Steuerfortsatz 85 schlägt im Zuge dieser Drehung des Nockens 59 an einer dem Rundbügel 61 abgewandten Begrenzung 75 der Steueröffnung 71 an und drängt den Riegel 65 dadurch entgegen der Vorspannung der Druckfeder 81 in eine Entriegelungsstellung E. In der Entriegelungsstellung E gelangt der Riegel 65 außer Eingriff zu einer Offenstellung-Eingriffsvertiefung 77, in welche der Riegel 65 eingreift, wenn sich der Rundbügel 61 in der Offenstellung O und der Riegel 65 sich in der Verriegelungsstellung V befindet. Dies ermöglicht es einem Nutzer, den Rundbügel 61 mittels der Handhabe 19 in Richtung der oder in die Geschlossenstellung G zu bewegen. Insbesondere kann die Bewegung in Richtung der Geschlossenstellung G entgegen einer Vorspannung des Rundbügels 61 in Richtung der Offenstellung O erfolgen, wobei die Vorspannung beispielsweise wie in den Fig. 1A und 1B gezeigt durch eine Zugfeder 17 erzeugt werden kann.

Nach dem Erreichen der Freigabestellung F kann die Steuereinrichtung 69 dazu ausgebildet sein, den Elektromotor 63 sodann zum Drehen des Nockens 59 in eine in Fig. 2B veranschaulichte Vorspannstellung T zu drehen, in welcher der Riegel 65 für eine Bewegung entgegen der Vorspannung durch die Druckfeder 81 freigegeben ist. Wie Fig. 2B veranschaulicht, ermöglicht es die Vorspannstellung T, den Riegel 65 entgegen der Vorspannung zurückzudrängen, so dass der Riegel 65 beispielsweise während einer Bewegung des Rundbügels 61 in die Geschlossenstellung G an dem Rundbügel 61 entlanggleiten kann. Wie Fig. 2B veranschaulicht, liegt der Riegel 65 während eines solchen Gleitens an den Führungsabschnitten 103 des Rundbügels 61 an und fasst die Führungsabschnitte 103 außen mit jeweiligen Zentrierabschnitten 105 ein, um die Drehbewegung des Rundbügels 61 in die Geschlossenstellung G führen zu können.

Jedoch ermöglicht es die Vorspannung des Riegels 65 in die Verriegelungsstellung V, dass der Riegel 65 bei in die Vorspannstellung T gedrehtem Nocken 59 unmittelbar in die Verriegelungsstellung V schnappt und in die Geschlossenstellung-Eingriffsvertiefung 79 eingreift, sobald der Rundbügel 61 die Geschlossenstellung G erreicht (vgl. auch Fig. 2A). Insofern kann der Rundbügel 61 aufgrund des Drehens des Nockens 59 in die Vorspannstellung T unmittelbar bei Erreichen der Geschlossenstellung G gegen eine Bewegung in Richtung der Offenstellung O gesichert werden, ohne dass ein Nutzer den Rundbügel 61 manuell in dieser Stellung halten muss.

Darüber hinaus ist bei dem Rahmenschloss 57' der bereits erwähnte Bügeldetektor 67 vorgesehen, welcher einen Magnetfeldsensor 97 sowie einen an dem Rundbügel 61 vorgesehenen Permanentmagnet 95 in der unmittelbaren Umgebung der Offenstellung-Eingriffsvertiefung 77 aufweist, wobei zudem ein weiterer, in den Figuren nicht sichtbarer Permanentmagnet in der unmittelbaren Umgebung der Geschlossenstellung-Eingriffsvertiefung 79 vorgesehen sein kann. Aufgrund des Zusammenwirkens des nicht gezeigten Permanentmagneten mit dem Magnetfeldsensor 97 kann der Bügeldetektor 67 detektieren, wenn der Rundbügel 61 die Geschlossenstellung G erreicht, und dies an die Steuereinrichtung 69 melden. Die Steuereinrichtung 69 kann dazu ausgebildet sein, in Ansprechen auf die Detektion der Geschlossenstellung G den Elektromotor 63 zum Drehen des Nockens 59 in die Sperrstellung S anzusteuern, um dadurch den Riegel 65 in der Verriegelungsstellung V zu sichern und gegen eine Bewegung entgegen der Vorspannung der Druckfeder 81 in Richtung der Entriegelungsstellung E zu sperren (vgl. Fig. 2A).

Das Rahmenschloss 57' ermöglicht somit einerseits gewissermaßen eine Automatikfunktion, indem der Riegel 65 bei Erreichen der Geschlossenstellung G unmittelbar in die Geschlossenstellung-Eingriffsvertiefung 79 einschnappen und den Rundbügel 61 dadurch gegen eine Bewegung in die Offenstellung O sichern kann, wobei durch das automatische Drehen des Nockens 59 in die Sperrstellung S andererseits zudem eine zuverlässige Sicherung des Riegels 65 in der Verriegelungsstellung V erreicht werden kann, um das Rahmenschloss 57' insbesondere gegen Aufbruchsversuche unter Einsatz der Hammerschlag-Methode zu schützen. Indem diese Sicherung durch den Eingriff des Steuerfortsatzes 85 und damit unmittelbar durch den Nocken 59 erfolgt, ist - anders als im Stand der Technik - kein gesondertes Element wie beispielsweise die Blockierfeder 37 erforderlich, um den Riegel 65 in der Verriegelungsstellung V gegen unbefugte Öffnungsversuche zu blockieren.

Wie aus den Fig. 2A bis 2C darüber hinaus hervorgeht, sind die Freigabestellung F und die Sperrstellung S des Nockens 59 einander bezüglich der Drehung des Nockens 59 diametral entgegengesetzt und der Nocken 59 ist zwischen der Freigabestellung F und der Sperrstellung S um 180 Grad drehbar. Darüber hinaus ist die Drehung des Nockens 59 aufgrund der Kontur 73 der Steueröffnung 71 auf Drehungen zwischen der Freigabestellung F und der Sperrstellung S und somit auf Drehungen um einen Drehwinkel von 180 Grad beschränkt, wobei der Nocken 59 entlang einer ersten Drehrichtung D1 von der Sperrstellung S in die Freigabestellung F und entlang einer der ersten Drehrichtung D1 entgegengesetzten Richtung D2 von der Freigabestellung F in die Sperrstellung S drehbar ist. Eine entsprechende Beschränkung der Drehbewegung kann zudem auch steuerungstechnisch festgelegt sein. Sowohl bei einer Drehung von der Sperrstellung S in die Freigabestellung F als auch bei einer Drehung von der Freigabestellung F in die Sperrstellung S passiert der Nocken 59 daher die Vorspannstellung T, welche insbesondere durch eine jeweilige Drehung des Nockens 59 um 90 Grad ausgehend von der Sperrstellung S oder der Freigabestellung F erreichbar ist.

Ferner ist bei dem Rahmenschloss 57', wie bereits erwähnt, in der Umgebung der Offenstellung-Eingriffsvertiefung 77 der Permanentmagnet 95 angeordnet (Fig. 2B), so dass der Bügeldetektor 67 auch dazu ausgebildet sein kann, die Offenstellung O zu detektieren, indem der Magnetfeldsensor 97 den Permanentmagnet 95 detektiert, und ein entsprechendes Signal an die Steuereinrichtung 69 übermittelt. Insbesondere können der Permanentmagnet 95 und der bereits erwähnte, in den Figuren nicht gezeigte Permanentmagnet zum Detektieren der Geschlossenstellung G unterschiedlich gepolt sein, so dass anhand der Signale des Magnetfeldsensors 97 unterscheidbar sein kann, welcher der Permanentmagnete sich in dessen Umgebung befindet. Die Steuereinrichtung 69 kann daher dazu ausgebildet sein, die Offenstellung O und die Geschlossenstellung G anhand der Signale des Bügeldetektors 67 zu unterscheiden.

Eine solche Detektion der Offenstellung O kann es der Steuereinrichtung 69 beispielsweise ermöglichen, zu prüfen, ob infolge eines empfangenen Schließbefehls der Rundbügel 61 tatsächlich in Richtung der oder in die Geschlossenstellung G bewegt wurde. Wird der Rundbügel 61 hingegen nicht bewegt und verbleibt in der Offenstellung O, kann die Steuereinrichtung 69 dazu ausgebildet sein, den Elektromotor 63 nach einer vorgegebenen oder vorgebbaren Wartezeit nach dem Schließbefehl zum Bewegen des Nockens 59 in die Sperrstellung S anzusteuern. Hierdurch kann erreicht werden, dass beispielsweise nach einem versehentlich ausgelösten Schließbefehl der Rundbügel 61 in der Offenstellung O neuerlich gesichert wird, um ungewollte Bewegungen des Rundbügels 61 zu verhindern.

Ferner kann die Steuereinrichtung 69 dazu ausgebildet sein, nach dem Überführen des Nockens 59 in die Freigabestellung F den Nocken 59 erst dann in die Vorspannstellung T zu drehen, wenn der Bügeldetektor 67 eine Bewegung des Rundbügels 61 aus der Offenstellung O heraus detektiert und/oder kein Signal mehr sendet, welches eine Anordnung des Rundbügels 61 in der Offenstellung O anzeigt.

Darüber hinaus kann die Steuereinrichtung 69 auch dazu ausgebildet sein, in Ansprechen auf einen insbesondere an dem Funkempfänger 45 empfangenen Öffnungsbefehl ausgehend von der Geschlossenstellung G des Rundbügels 61 den Elektromotor 63 zunächst zum Bewegen des Nockens 59 in die Freigabestellung F anzusteuern. Dadurch kann der Riegel 65 in die Entriegelungsstellung E bewegt und der Rundbügel 61 für eine Bewegung in Richtung der Offenstellung O freigegeben werden. Insbesondere kann der Rundbügel 61 unmittelbar aufgrund einer Vorspannung in die Offenstellung O bewegt werden, wenn der Rundbügel 61 ausgehend von der Geschlossenstellung G für eine solche Bewegung freigegeben wird. Die Steuereinrichtung 69 kann daraufhin dazu ausgebildet sein, den Elektromotor 63 in Ansprechen auf eine Detektion der Offenstellung O durch den Bügeldetektor 67 zum Drehen des Nockens 59 in die Sperrstellung S anzusteuern, um den Rundbügel 61 wiederum in der Offenstellung O zu sichern. Hierdurch kann der Rundbügel 61 auch in der Offenstellung O durch einen Eingriff des Riegels 65 in die Offenstellung-Eingriffsvertiefung 77 und das Blockieren des Riegels 65 in der Verriegelungsstellung V zuverlässig gesichert werden.

Fig. 3A veranschaulicht die Ausbildung der Steueröffnung 71, welche einen Vorspannabschnitt 87 und einen Verriegelungsabschnitt 89 aufweist. Der Vorspannabschnitt 87 weist eine im Vergleich zu dem Verriegelungsabschnitt 89 größere Ausdehnung in Richtung der Bewegungsrichtung B des Riegels 65 auf, wobei der Steuerfortsatz 85 des Nockens 59 in der Vorspannstellung T in dem Vorspannabschnitt 87, in der Sperrstellung S und in der Freigabestellung F jedoch in dem Verriegelungsabschnitt 89 angeordnet ist (vgl. auch Fig. 2A bis 2C). Diese Ausbildung der Steueröffnung 71 ermöglicht es, dass der Steuernocken 85 in der Freigabestellung F und in der Sperrstellung S an jeweiligen entgegengesetzten Begrenzungen 75 der Steueröffnung 71 anliegt und den Riegel 65 dadurch entweder in der Verriegelungsstellung V blockiert oder entgegen der Vorspannung durch die Druckfeder 81 in die Entriegelungsstellung E drängt, wohingegen die größere Ausdehnung des Vorspannabschnitts 87 eine Bewegung des Riegels 65 relativ zu dem Steuerfortsatz 85 ermöglicht, wenn der Nocken 59 in die Vorspannstellung T gedreht und der Steuerfortsatz 85 in dem Vorspannabschnitt 87 angeordnet ist.

Darüber hinaus wird aus den Fig. 2A und 2C ersichtlich, dass die Sperrstellung S durch eine Position des Nockens 59 definiert ist, in welcher der Steuerfortsatz 85 radial bezüglich der Drehung des Rundbügels 61 den geringsten Abstand zu dem Rundbügel 61 aufweist, wohingegen der Steuerfortsatz 85 des Nockens 59 in der Freigabestellung F radial den größten Abstand zu dem Rundbügel 61 im Hinblick auf die von dem Nocken 59 ausführbare Drehbewegung aufweist. In der Vorspannstellung T ist der Steuerfortsatz 85 mit einem bezogen auf den Abstand in der Sperrstellung S und der Freigabestellung F mittleren radialen Abstand zu dem Rundbügel 61 positioniert. Das Rahmenschlos 57' kann ferner ein in den Figuren nicht gezeigtes Potentiometer umfassen, welches mit einer Motorwelle des Elektromotors 63 verbunden ist, und die Steuereinrichtung 69 kann dazu ausgebildet sein, die Drehstellung des Nockens 59 anhand der Signale des Potentiometers zu bestimmen, um insbesondere eine gezielte Drehung des Nockens 59 in die Vorspannstellung T zu ermöglichen.

### Bezugszeichenliste

- 11: Rundbügel
- 13: Offenstellung-Eingriffsvertiefung
- 15: Geschlossenstellung-Eingriffsvertiefung
- 17: Zugfeder
- 19: Handhabe
- 21: Schließrichtung
- 23: Riegel
- 25: Druckfeder
- 27: Ausnehmung
- 29: Welle
- 31: Entriegelungsnocken
- 33: Schaltnocken
- 35: Freigabenase
- 37: Blockierfeder
- 39: Elektromotor
- 41: Steuereinrichtung
- 43: Kontaktschalter
- 45: Funkempfänger
- 47: Batterie
- 49: Entriegelungsrichtung
- 51: Zwangsführungsfläche
- 53: Blockieraussparung
- 55: Drehrichtung
- 57: Rahmenschloss
- 57': Rahmenschloss
- 59: Nocken
- 61: Rundbügel
- 63: Elektromotor
- 65: Riegel
- 67: Bügeldetektor
- 69: Steuereinrichtung
- 71: Steueröffnung
- 73: Kontur
- 75: Begrenzung
- 77: Offenstellung-Eingriffsvertiefung
- 79: Geschlossenstellung-Eingriffsvertiefung
- 81: Druckfeder
- 85: Steuerfortsatz
- 87: Vorspannabschnitt
- 89: Verriegelungsabschnitt
- 91: Steuerplatte
- 93: Blech
- 95: Permanentmagnet
- 97: Magnetfeldsensor
- 99: konkav abgerundete Aussparung
- 101: konvex abgerundeter Abschnitt
- 103: Führungsabschnitt
- 105: Zentrieraussparung
- B: Bewegungsrichtung
- D1: erste Drehrichtung
- D2: zweite Drehrichtung
- E: Entriegelungsstellung
- F: Freigabestellung
- G: Geschlossenstellung
- O: Offenstellung
- S: Sperrstellung
- T: Vorspannstellung
- V: Verriegelungsstellung

## Patentansprüche

1. Elektronisches Rahmenschloss (57') für ein Fahrrad,
umfassend
- einen zwischen einer Offenstellung (O) und einer Geschlossenstellung (G) drehbaren Rundbügel (61),
- einen Elektromotor (63),
- einen von dem Elektromotor (63) zu einer exzentrischen Drehbewegung um eine Drehachse antreibbaren Nocken (59),
- einen senkrecht zu der Drehachse und radial zu dem Rundbügel (61) zwischen einer Verriegelungsstellung (V) und einer Entriegelungsstellung (E) geradlinig beweglichen Riegel (65), welcher in Richtung der Verriegelungsstellung (V) vorgespannt ist,
- einen Bügeldetektor (67), welcher dazu ausgebildet ist, die Geschlossenstellung (G) des Rundbügels (61) zu detektieren, und
- eine Steuereinrichtung (69),
wobei der sich in der Geschlossenstellung (G) befindliche Rundbügel (61) durch den in der Verriegelungsstellung (V) befindlichen Riegel (65) gegen eine Bewegung in Richtung der Offenstellung (O) sicherbar und durch Bewegen des Riegels (65) in die Entriegelungsstellung (E) für eine Bewegung in die Offenstellung (O) freigebbar ist, wobei der Nocken (59) durch den Elektromotor (63) in eine Sperrstellung (S), eine Vorspannstellung (T) und eine Freigabestellung (F) drehbar ist,
wobei der Riegel (65) eine Steueröffnung (71) aufweist, in welche der Nocken (59) eingreift, wobei der Riegel (65) durch Drehen des Nockens (59) gemäß der Drehbewegung des Nockens (59) und einer Kontur (73) der Steueröffnung (71) antreibbar ist, wobei der Riegel (65)
- durch Drehen des Nockens (59) in die Sperrstellung (S) von dem Nocken (59) gegen eine Bewegung aus der Verriegelungsstellung (V) in Richtung der Entriegelungsstellung (E) sicherbar,
- durch Drehen des Nockens (59) in die Vorspannstellung (T) für eine Bewegung entgegen der Vorspannung in Richtung der Entriegelungsstellung (E) freigebbar, und
- durch Drehen des Nockens (59) in die Freigabestellung (F) von dem Nocken (59) entgegen der Vorspannung in die Entriegelungsstellung (E) bewegbar ist, wobei die Steuereinrichtung (69) dazu ausgebildet ist, den Elektromotor (63) zum Drehen des Nockens (59) wahlweise in die Sperrstellung (S), die Vorspannstellung (T) und die Freigabestellung (F) anzusteuern, und wobei die Steuereinrichtung (69) dazu ausgebildet ist, den Elektromotor (63) in Ansprechen auf eine Detektion der Geschlossenstellung (G) des Rundbügels (61) durch den Bügeldetektor (67) zum Drehen des Nockens (59) in die Sperrstellung (S) anzusteuern.

2. Elektronisches Rahmenschloss (57') nach Anspruch 1,
wobei der Rundbügel (61) eine Geschlossenstellung-Eingriffsvertiefung (79) aufweist, wobei der Riegel (65) dazu ausgebildet ist, bei sich in der Geschlossenstellung (G) befindlichem Rundbügel (61) in der Verriegelungsstellung (V) in die Geschlossenstellung-Eingriffsvertiefung (79) einzugreifen und den Rundbügel (61) dadurch gegen eine Bewegung in die Offenstellung (O) zu sichern.

3. Elektronisches Rahmenschloss (57') nach Anspruch 1 oder 2,
wobei die Steuereinrichtung (69) dazu ausgebildet ist, ausgehend von der Offenstellung (O) des Rundbügels (61) aufgrund eines empfangenen Schließbefehls
- zunächst den Elektromotor (63) zum Drehen des Nockens (59) in die Freigabestellung (F) anzusteuern und dadurch den Riegel (65) in die Entriegelungsstellung (E) zu bewegen;
- sodann den Elektromotor (63) zum Drehen des Nockens (59) in die Vorspannstellung (T) anzusteuern; und
- in Ansprechen auf eine Detektion der Geschlossenstellung (G) des Rundbügels (61) durch den Bügeldetektor (67) den Elektromotor (63) zum Drehen des Nockens (59) in die Sperrstellung (S) anzusteuern.

4. Elektronisches Rahmenschloss (57') nach einem der vorhergehenden Ansprüche,
wobei der Nocken (59) um eine Motordrehachse des Elektromotors (63) drehbar ist; und/oder
wobei der Elektromotor (63) im Wesentlichen tangential zu dem Rundbügel (61) angeordnet ist.

5. Elektronisches Rahmenschloss (57') nach einem der vorhergehenden Ansprüche, wobei der Nocken (59) einen Steuerfortsatz (85) aufweist, mit welchem der Nocken (59) in die Steueröffnung (71) eingreift.

6. Elektronisches Rahmenschloss (57') nach Anspruch 5,
wobei die Steueröffnung (71) einen Vorspannabschnitt (87), welcher entlang einer Bewegungsrichtung (B) des Riegels (65) eine erste Ausdehnung aufweist, und einen Verriegelungsabschnitt (89) aufweist, welcher entlang der Bewegungsrichtung (B) des Riegels (65) eine gegenüber der ersten Ausdehnung kleinere zweite Ausdehnung aufweist, wobei der Steuerfortsatz (85) des Nockens (59) in der Vorspannstellung (T) in dem Vorspannabschnitt (87) und in der Freigabestellung (F) sowie in der Sperrstellung (S) in dem Verriegelungsabschnitt (89) angeordnet ist; und/oder
wobei der Steuerfortsatz (85) in der Freigabestellung (F) an einer dem Rundbügel (61) abgewandten Begrenzung (75) der Steueröffnung (71) und in der Sperrstellung (S) an einer dem Rundbügel (61) zugewandten Begrenzung (75) der Steueröffnung (71) anliegt.

7. Elektronisches Rahmenschloss (57') nach einem der vorhergehenden Ansprüche, wobei der Riegel (65) als ein flaches Blech (93) ausgebildet ist.

8. Elektronisches Rahmenschloss (57') nach einem der vorhergehenden Ansprüche, wobei der Rundbügel (61) in die Offenstellung (O) vorgespannt ist.

9. Elektronisches Rahmenschloss (57') nach einem der vorhergehenden Ansprüche, wobei der Bügeldetektor (67) dazu ausgebildet ist, die Offenstellung (O) zu detektieren.

10. Elektronisches Rahmenschloss (57') nach Anspruch 9,
wobei die Steuereinrichtung (69) dazu ausgebildet ist, den Elektromotor (63) nach dem Drehen des Nockens (59) in die Freigabestellung (F) erst in Ansprechen auf ein Signal des Bügeldetektors (67) zum Drehen des Nockens (59) in die Vorspannstellung (T) anzusteuern, welches eine Bewegung des Rundbügels (61) aus der Offenstellung (O) heraus kennzeichnet; und/oder
wobei die Steuereinrichtung (69) dazu ausgebildet ist, infolge des Empfangens des Schließbefehls den Elektromotor (63) nach einer vorgegebenen oder vorgebbaren Wartezeit zum Bewegen des Nockens (59) in die Sperrstellung (S) anzusteuern, sofern der Bügeldetektor (67) nach der vorgegebenen oder vorgebbaren Wartezeit die Offenstellung (O) detektiert.

11. Elektronisches Rahmenschloss (57') nach Anspruch 9 oder 10,
wobei die Steuereinrichtung (69) dazu ausgebildet ist, ausgehend von der Geschlossenstellung (G) des Rundbügels (61) aufgrund eines empfangenen Öffnungsbefehls
- zunächst den Elektromotor (63) zum Drehen des Nockens (59) in die Freigabestellung (F) anzusteuern und dadurch den Riegel (65) in die Entriegelungsstellung (E) zu bewegen; und
- in Ansprechen auf eine Detektion der Offenstellung (O) des Rundbügels (61) durch den Bügeldetektor (67) den Elektromotor (63) zum Drehen des Nockens (59) in die Sperrstellung (S) anzusteuern.

12. Elektronisches Rahmenschloss (57') nach einem der vorhergehenden Ansprüche, wobei der Rundbügel (61) eine Offenstellung-Eingriffsvertiefung (77) aufweist und wobei der Riegel (65) dazu ausgebildet ist, bei sich in der Offenstellung (O) befindlichem Rundbügel (61) in der Verriegelungsstellung (V) in die Offenstellung-Eingriffsvertiefung (77) einzugreifen und den Rundbügel (61) dadurch gegen eine Bewegung in die Geschlossenstellung (G) zu sichern.

13. Elektronisches Rahmenschloss (57') nach einem der vorhergehenden Ansprüche,
wobei Nocken (59) über die Vorspannstellung (T) von der Freigabestellung (F) in die Sperrstellung (S) drehbar ist; und/oder
wobei der Nocken (59) entlang einer ersten Drehrichtung von der Sperrstellung (S) in die Freigabestellung (F) und entlang einer der ersten Drehrichtung entgegengesetzten zweiten Drehrichtung von der Freigabestellung (F) in die Sperrstellung (S) drehbar ist.

14. Elektronisches Rahmenschloss (57') nach einem der vorhergehenden Ansprüche, wobei der Elektromotor (63) lediglich zum Bewegen des Nockens (59) zwischen der Freigabestellung (F) und der Sperrstellung (S) ausgebildet ist, insbesondere wobei der Nocken (59) um 180 Grad von der Freigabestellung (F) in die Sperrstellung (S) drehbar ist, und umgekehrt.

15. Elektronisches Rahmenschloss (57') nach einem der vorhergehenden Ansprüche, wobei der Bügeldetektor (67) wenigstens einen Permanentmagneten (95) an dem Rundbügel (61) und einen stationären Magnetfeldsensor (97) umfasst.
